(19) Europäisches Patentamt
European Patent Office
Office européen des brevets

(11) **EP 3 434 991 A1**

(12) **DEMANDE DE BREVET EUROPEEN**

(43) Date de publication:
**30.01.2019 Bulletin 2019/05**

(21) Numéro de dépôt: **18184364.0**

(22) Date de dépôt: **19.07.2018**

(51) Int Cl.:
*F24F 11/00* (2018.01)          *F24F 11/64* (2018.01)
*F24F 11/65* (2018.01)          *F24F 11/46* (2018.01)
*F24F 11/77* (2018.01)          *F24F 110/52* (2018.01)
*F24F 110/66* (2018.01)        *F24F 110/70* (2018.01)
*F24F 120/10* (2018.01)        *F24F 130/10* (2018.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **28.07.2017 FR 1757189**

(71) Demandeur: **Commissariat à l'Energie Atomique
et aux Energies
Alternatives
75015 Paris (FR)**

(72) Inventeurs:
• **RAYBAUD, Blaise**
  **06530 Saint Cézaire sur Siagne (FR)**
• **ALESSI, Franck**
  **73000 Chambéry (FR)**
• **FOUCQUIER, Aurélie**
  **73000 Chambéry (FR)**

(74) Mandataire: **Cabinet Camus Lebkiri
25 rue de Maubeuge
75009 Paris (FR)**

(54) **PROCEDE DE REGULATION DE LA VENTILATION D'UNE ENCEINTE ET DISPOSITIF METTANT EN OEUVRE LEDIT PROCEDE**

(57) Un premier aspect de l'invention concerne un procédé (100) de régulation de la ventilation comprenant une étape (101) de calcul d'un objectif de pilotage à partir de valeurs seuils, ledit calcul prenant en compte un critère de qualité de l'air intérieur et un critère d'efficacité énergétique ; une étape (102) de quantification de la concentration en $CO_2$ et de la concentration d'au moins un deuxième polluant dans l'air au sein de ladite enceinte ; et une étape (103) de génération d'une consigne de débit d'air à partir de la quantification effectuée, de l'objectif de pilotage et à l'aide d'un algorithme de pilotage de la ventilation. Un deuxième aspect de l'invention concerne un dispositif comportant les moyens configurés pour mettre en oeuvre un procédé selon un premier aspect de l'invention.

100

Figure 1

**Description**

**DOMAINE TECHNIQUE DE L'INVENTION**

Le domaine technique de l'invention est celui de la régulation de la ventilation. La présente invention concerne un procédé de régulation de la ventilation d'une enceinte et en particulier un procédé de la régulation d'une enceinte prenant en compte au moins deux polluants ainsi que des objectifs de pilotage, notamment en termes d'économie d'énergie, de qualité de l'air et d'intermittence de la ventilation.

**ARRIERE-PLAN TECHNOLOGIQUE DE L'INVENTION**

Les systèmes de ventilation fonctionnent généralement de manière constante et permanente par tirage mécanique de sorte à assurer un taux de renouvellement de l'air minimum. Le tirage mécanique est plus particulièrement utilisé dans le cadre des ventilations par insufflation, extraction et double flux. Cependant, un taux de renouvellement de l'air constant ou permanent n'est pas le fonctionnement optimum, notamment du point de vue de l'efficacité énergétique. Or, l'efficacité énergétique s'est installée au coeur des préoccupations, en particulier dans le secteur du bâtiment.
Afin de réduire l'impact de la ventilation sur l'efficacité énergétique des bâtiments, il existe des systèmes qui modulent la ventilation en fonction de la qualité de l'air. Cependant, une ventilation régulée à partir d'un grand nombre d'indicateurs présente le risque d'une intermittence très élevée au niveau de la commande des moyens de ventilation, ce qui conduit à la génération de nuisances sonores pour les occupants et à une usure mécanique prématurée de ces moyens de ventilation. Ce qui rend dans les faits la prise en compte effective de l'efficacité énergétique très difficile.
Ainsi, il existe un besoin d'un procédé de régulation de la ventilation permettant de prendre en compte plusieurs polluants et de réguler la ventilation de sorte à assurer une bonne efficacité énergétique et, éventuellement une faible intermittence de le ventilation, tout en garantissant une bonne qualité de l'air. Il existe également un besoin d'un procédé de régulation permettant de modifier facilement les polluants pris en compte ou bien encore de prendre en compte l'historique de la régulation afin d'améliorer l'efficacité de cette dernière.

**RESUME DE L'INVENTION**

L'invention offre une solution aux problèmes évoqués précédemment, en permettant de réguler la ventilation d'une enceinte tout en prenant en compte aux moins deux polluants et un objectif de pilotage.
Pour cela, un premier aspect de l'invention concerne un procédé de régulation de la ventilation d'une enceinte comprenant :

- une étape de calcul d'un objectif de pilotage à partir de valeurs seuils, ledit calcul prenant en compte un critère de qualité de l'air intérieur et un critère d'efficacité énergétique ;
- une étape de quantification de la concentration en $CO_2$ et de la concentration d'au moins un deuxième polluant dans l'air au sein de ladite enceinte ; et
- une étape de génération d'une consigne de débit d'air à partir de la quantification effectuée, de l'objectif de pilotage et à l'aide d'un algorithme de pilotage de la ventilation.

Grâce à l'invention, la consigne de ventilation est non seulement fonction de la concentration de deux polluants, mais elle est également fonction d'un objectif de pilotage prenant notamment en compte la qualité de l'air et l'efficacité énergétique.
Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.
Avantageusement, l'étape de calcul d'un objectif de pilotage comprend

- une sous-étape de simulation du comportement de l'enceinte ; et
- une sous-étape de détermination de l'objectif de pilotage à partir des résultats de ladite simulation.

Ainsi, l'objectif de pilotage peut être déterminé en amont et le procédé de pilotage plus rapidement opérationnel, par exemple en identifiant des objectifs de pilotage pour des enceintes types.
Avantageusement, l'objectif de pilotage prend également en compte l'intermittence de la ventilation. Ainsi, la génération de nuisances sonores pour les occupants est limitée et l'usure mécanique des moyens de ventilation est réduite.
Avantageusement, l'objectif de pilotage est variable au cours du temps. Ainsi, il est par exemple possible de prendre en compte les variations du taux d'occupation de l'enceinte à réguler.

Avantageusement, l'étape de quantification comprend une sous-étape d'acquisition, à l'aide de capteurs positionnés à différents endroits de l'enceinte, de la quantité de $CO_2$ et/ou la concentration d'au moins un autre polluant. Avantageusement, le deuxième polluant est un composé organique volatil.

Ainsi, les consignes peuvent être élaborées à partir de différentes mesures faites au sein de l'enceinte.

Avantageusement, l'étape de quantification comprend une sous-étape de simulation prenant en compte les matériaux présents dans l'enceinte à réguler, la présence d'occupants, la météo et/ou la pollution de l'air extérieur à l'enceinte, ladite simulation fournissant la quantité de $CO_2$ et/ou la concentration d'au moins un autre polluant.

Ainsi, même en l'absence de capteurs (ou en complément de ces derniers), il est possible de simuler le comportement de l'enceinte et de prendre en compte ces simulations dans l'élaboration de la consigne de débit d'air.

Avantageusement, l'algorithme de pilotage est un algorithme par logique floue et chaque polluant est associé à au moins deux fonctions d'appartenances, chaque fonction d'appartenance étant associée à un niveau de concentration et dépendante de l'objectif de pilotage.

Ainsi, l'ajout d'un ou plusieurs polluants se fait facilement par l'ajout des fonctions d'appartenances correspondantes. De plus, la prise en compte de l'objectif de pilotage est assurée à travers chaque fonction d'appartenance.

Avantageusement, le débit d'air est associé à un nombre de fonctions d'appartenances égal au nombre de fonctions d'appartenances associées à chaque polluant, chaque fonction d'appartenance du débit d'air est associée à un niveau de débit d'air et chaque niveau de concentration est associé à un niveau de débit d'air.

Ainsi, la prise en compte de niveaux de concentrations très différents peut être effectuée.

Avantageusement, l'étape de génération d'une consigne comprend pour chaque niveau de concentration :

- pour chaque polluant, une sous-étape de calcul de la valeur de la fonction d'apparence dudit polluant correspondant à la concentration de polluant mesurée ;
- une sous-étape de sélection, de la valeur maximale parmi les valeurs calculées ;
- une sous-étape de report de ladite valeur maximale sur la fonction d'appartenance du débit d'air dont le niveau est associé au niveau de concentration considéré de sorte à en déduire une aire ;

De plus, l'étape de génération d'une consigne comprend une sous-étape de calcul de la consigne de débit d'air à partir des aires ainsi déduites.

Ainsi, la consigne de pilotage est établie à partir des fonctions d'appartenances et donc en tenant compte de l'objectif de pilotage.

Avantageusement, un calcul de la consigne de débit d'air correspondant à une première situation et une deuxième situation est effectué, la première situation correspondant à une situation dans laquelle l'ensemble des polluants sont sous leurs seuils de déclenchement de la ventilation et la deuxième situation correspondant à une situation dans laquelle un polluant est au-dessus de son seuil de ventilation maximale, les autres polluants étant en dessous de leurs seuils de déclenchement de la ventilation et une correction est apportée à la consigne de débit d'air de sorte que la consigne de débit d'air soit nulle dans la première situation et maximale dans la seconde situation.

Avantageusement, le procédé selon un premier aspect de l'invention comprend une pluralité d'étapes de quantification et d'étapes de génération de consignes. Le procédé selon un premier aspect de l'invention comprend également :

- après chaque étape de génération d'une consigne, une étape d'enregistrement des données concernant la quantification de polluant et la consigne associée ; et
- lorsqu'un nombre déterminé d'itérations de l'étape de génération de consignes est atteint, une étape de modification de l'objectif de pilotage, ladite modification étant fonction des données enregistrées.

Ainsi, l'objectif de pilotage peut être mis à jour au fur et à mesure de la régulation en prenant en compte l'historique des quantifications de polluants et la consigne de ventilation associée.

Un deuxième aspect de l'invention concerne un dispositif de régulation de la ventilation d'une enceinte caractérisé en ce qu'il comprend :

- des moyens pour calculer un objectif de pilotage à partir de valeurs seuils, ledit calcul prenant en compte un critère de qualité de l'air intérieur et un critère d'efficacité énergétique ;
- des moyens pour quantifier la concentration en $CO_2$ et la concentration d'au moins un deuxième polluant dans l'air au sein de ladite enceinte ;
- des moyens pour générer une consigne de débit d'air à partir de la quantification effectuée, de l'objectif de pilotage et à l'aide d'un algorithme de pilotage de la ventilation.

Un troisième aspect de l'invention concerne un produit programme d'ordinateur comprenant des instructions qui conduisent le dispositif selon un deuxième aspect de l'invention à exécuter les étapes du procédé selon un premier aspect de l'invention.

Un quatrième aspect de l'invention concerne un support lisible par ordinateur, sur lequel est enregistré le programme d'ordinateur selon un troisième aspect de l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre un ordinogramme d'un procédé selon un mode de réalisation d'un premier aspect de l'invention.
- La figure 2 montre une représentation schématique d'une simulation du comportement d'une enceinte.
- Les figures 3A et 3B montrent une représentation schématique des fonctions d'appartenances associées aux concentrations de polluants (figure 3A) et aux débits de ventilation (figure 3B).
- Les figures 4A à 4G montrent un calcul d'une consigne de débit de ventilation d'un procédé selon un mode de réalisation d'un premier aspect de l'invention.
- La figure 5 montre un ordinogramme d'un procédé selon un mode de réalisation d'un premier aspect de l'invention.
- La figure 6 montre une représentation schématique d'un dispositif selon un mode de réalisation d'un deuxième aspect de l'invention.

**DESCRIPTION DETAILLEE D'AU MOINS UN MODE DE REALISATION DE L'INVENTION**

Sauf précision contraire, un même élément apparaissant sur des figures différentes présente une référence unique.

Un premier aspect de l'invention concerne un procédé 100 de régulation de la ventilation d'une enceinte. L'enceinte peut prendre la forme d'une habitation, d'un véhicule ou, plus généralement, d'un espace clos nécessitant une ventilation. De plus, cette enceinte peut comprendre une ou plusieurs zones (ou pièces). Dans ce cas, le procédé selon l'invention est mise en oeuvre pour chaque zones et la consigne de débit de l'air est spécifique à chaque zones de l'enceinte. Il sera donc possible de choisir des objectifs de pilotage différents en fonction de la zone considérée, par exemple en lien avec la fonction de la pièce. Dans la suite, à des fins d'illustration, une enceinte ne comportant qu'une seule zone est choisie.

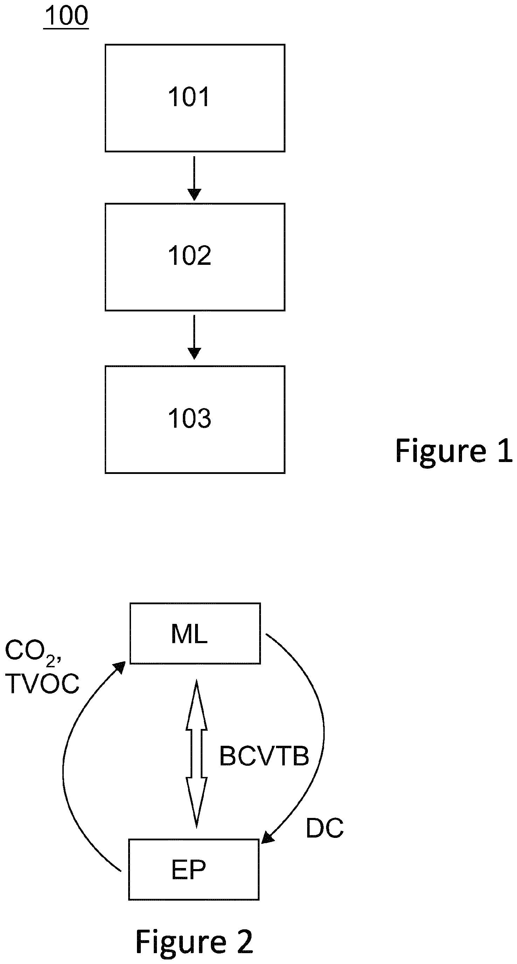

Dans un premier mode de réalisation illustré à la figure 1, le procédé 100 de régulation comprend une étape 101 de calcul d'un objectif de pilotage à partir de valeurs seuils, ledit calcul prenant en compte un critère de qualité de l'air intérieur et un critère d'efficacité énergétique ; de sorte à obtenir un compromis entre la qualité de l'air et l'énergie nécessaire au maintien de la température au sein de l'enceinte régulée. De préférence, l'objectif de pilotage prend également en compte l'intermittence de la ventilation de sorte à limiter cette dernière et donc à retarder l'usure mécanique des moyens de ventilation et réduire les nuisances pour l'occupant, notamment sonores. Dans un mode de réalisation, l'objectif de pilotage est variable au cours du temps afin, par exemple, de prendre en compte les variations du taux d'occupation de l'enceinte à réguler.

Cette étape peut être réalisée à l'aide d'un moyen MC de calcul comprenant par exemple un calculateur, ledit calculateur comportant un processeur couplé à une mémoire, et ladite mémoire comportant les instructions nécessaires au calcul de l'objectif de pilotage.

Dans un mode de réalisation, l'étape de calcul d'un objectif de pilotage peut être faite à l'aide d'une simulation avant toute génération de consignes. Autrement dit, l'objectif de pilotage est initialisé au moyen d'une simulation et l'objectif de pilotage ainsi obtenu est ensuite utilisé pour générer les consignes de ventilation. Dans un exemple illustré à la figure 2, afin d'initialiser l'objectif de pilotage, le logiciel EnergyPlus est utilisé en conjonction avec le logiciel MATLAB, les deux logiciels échangeant leurs données à l'aide de la plateforme BCVTB (Building Control Virtual Test Bed) développée par le DOE (Department of Energy). Plus particulièrement, le logiciel EnergyPlus est utilisé pour modéliser le comportement thermique de l'enceinte, le modèle prenant également en compte la concentration de polluants et donc la qualité de l'air. Par exemple, l'émission de $CO_2$ est estimée en fonction du nombre d'occupants de l'enceinte et le TCOV est estimé en supposant que l'émission de TCOV est constante dans l'enceinte et, le cas échéant, les zones qui la composent. A partir de la quantification de polluant et à l'aide du logiciel MATLAB, une consigne de ventilation DC est calculée. Puis, le logiciel MATLAB communique cette consigne DC au logiciel EnergyPlus qui actualise alors la quantité de polluants.

Ainsi, il est possible de simuler l'évolution de la quantité de polluant dans l'air de l'enceinte en fonction des consignes de ventilation fournies par MATLAB. Différentes simulations sont ensuite effectuées pour différents débits de ventilation en fonction de la quantité de polluants et comparées selon un critère de qualité de l'air, un critère d'efficacité énergétique et, éventuellement, un critère d'intermittence. Ces simulations vont permettre d'optimiser les paramètres (seuils de déclenchement de la ventilation et seuils de ventilation maximale) de l'algorithme de pilotage de la ventilation en vue de répondre aux objectifs fixés. Une optimisation globale pour l'ensemble des polluants considérés est possible, ces seuils s'exprimant alors sous la forme d'un pourcentage du critère sanitaire de chaque polluant. Le nombre de paramètres d'entrée de l'algorithme est alors limité à deux : le pourcentage déterminant les seuils de déclenchement de la ventilation et celui déterminant les seuils de ventilation maximale. De plus, cette optimisation pourra par exemple prendre en compte une entrée utilisateur demandant de privilégier un critère par rapport à un autre. Autrement dit, cette étape va permettre d'obtenir, pour chaque polluant, un seuil de déclenchement (correspondant au déclenchement de la ventilation) et un seuil critique (correspondant à une consigne de débit de l'air maximale) qui seront utilisés ensuite pour la génération des consignes de ventilation.

Plusieurs méthodes de calcul peuvent être envisagées dans l'évaluation des critères évoqués précédemment en fonction des paramètres pris en compte à travers ces derniers. Dans un mode de réalisation, l'indicateur d'efficacité énergétique peut être calculé en sommant les consommations électriques, notamment dues au chauffage et à la ventilation. Si l'enceinte comporte plusieurs zones (ou pièces), cette somme sera effectuée pour l'ensemble des zones. L'indicateur de la qualité de l'air peut quant à lui être calculé par l'intermédiaire d'indicateurs de qualité de l'air associé à chaque polluant, lesdits indicateurs par polluant étant obtenus à l'aide des étapes suivantes :

- une première étape de calcul, pour chaque polluant, d'une pondération, ladite pondération étant égale à zéro si le polluant respecte un seuil prédéfini, par exemple un critère sanitaire imposé, ou à l'écart entre la valeur à laquelle est quantifié le polluant et ledit seuil de sorte que :

$$ponderation_{Pi} = \frac{\max(quantité_{Pi} - seuil_{Pi}, 0)}{seuil_{Pi}}$$

- une deuxième étape de calcul, pour chaque polluant et à partir de la pondération précédemment obtenue, d'un indice de qualité de l'aire relatif au polluant considéré :

$$QAI_{polluant} = \frac{(quantité_{Pi} \times ponderation_{Pi})}{seuil_{Pi}}$$

où max(x, y) est la fonction qui retourne la valeur la plus élevée entre la valeur x et la valeur y ; $ponderation_{Pi}$ est le facteur de pondération associé au polluant Pi ; $quantité_{Pi}$ est la quantité de polluant Pi ; et $seuil_{Pi}$ est le seul associé au polluant $P_i$.

Une fois les indicateurs de qualité par polluant obtenus pour chaque polluant, l'indicateur de qualité total est obtenu en faisant la somme de l'ensemble de ces indicateurs :

$$QAI_{totale} = \sum_{polluant} QAI_{polluant}$$

Bien entendu, si l'enceinte comporte plusieurs zones, ces calculs seront effectués pour chaque zone et l'indicateur de qualité total sera obtenu en sommant sur l'ensemble des zones. Enfin, l'indicateur d'intermittence est obtenu par une méthode d'évaluation du lissage, par exemple à l'aide d'une transformée de fourrier rapide (FFT pour Fast Fourrier Transform en anglais).

Le procédé selon un premier aspect de l'invention comprend également une étape 102 de quantification de la concentration en $CO_2$ et de la concentration d'au moins un deuxième polluant dans l'air au sein de ladite enceinte. De préférence, le deuxième polluant est un composé organique volatil (ou COV).

Cette étape de quantification peut être effectuée de plusieurs manières qui ne sont pas mutuellement exclusives, mais qui peuvent au contraire être utilisées de façon complémentaire. La quantification peut être effectuée à l'aide de capteurs positionnés à différents endroits de l'enceinte, mais également à l'extérieur de l'enceinte afin de quantifier les polluants dans l'environnement immédiat de cette dernière. Ces capteurs peuvent comprendre des capteurs de $CO_2$, d'humidité, de particules, ou bien encore de COV. La quantification peut également être effectuée à l'aide d'une ou plusieurs simulations prenant en compte les matériaux présents dans l'enceinte à réguler, la présence d'occupants, la

5

météo et/ou la pollution de l'air extérieur à l'enceinte. D'autres paramètres peuvent bien entendu être envisagés, par exemple des informations concernant la circulation routière. Ces paramètres peuvent être saisis par un utilisateur ou bien encore téléchargés sur un serveur distant. Cette simulation peut être réalisée à l'aide d'un calculateur. Le calculateur peut comporter un processeur couplé à une mémoire, ladite mémoire comprenant les instructions nécessaires à la mise en oeuvre de la simulation, ainsi que des moyens COM de communication de sorte à transmettre les résultats de la simulation et/ou télécharger les données nécessaires à la simulation. Le calculateur utilisé peut être celui utilisé lors de l'étape 101 de calcul d'un objectif de pilotage.

Le procédé comprend également une étape 103 de génération d'une consigne de débit d'air à partir de la quantification effectuée, de l'objectif de pilotage et à l'aide d'un algorithme de pilotage de la ventilation.

Dans un mode de réalisation, l'algorithme de pilotage de la ventilation est un algorithme par logique floue et chaque polluant est associé à au moins deux fonctions d'appartenances, chaque fonction d'appartenance étant associée à un niveau de concentration et chaque fonction d'appartenance dépendant de l'objectif de pilotage. La logique permet notamment une grande facilité de mise en oeuvre du procédé de l'invention et autorise une modification et une adaptation facile de ce dernier. De préférence, chaque polluant est associé à trois fonctions d'appartenances. Dans un mode de réalisation, chaque polluant pris en compte se voit attribuer une première fonction d'appartenance associée aux concentrations faibles CF, une deuxième fonction d'appartenance associée aux concentrations modérées CM et une troisième fonction d'appartenance associée aux concentrations élevées CE. Les fonctions d'appartenances associées à chaque polluant sont établies en fonction de l'objectif de pilotage calculé à l'étape 101 de calcul d'un objectif de pilotage à partir de valeurs seuils. Plus particulièrement, chaque polluant est associé à un premier seuil, dit seuil de déclenchement SD de la ventilation et un deuxième seuil, dit seuil critique SC, lesdits seuils étant fixés par l'objectif de pilotage.

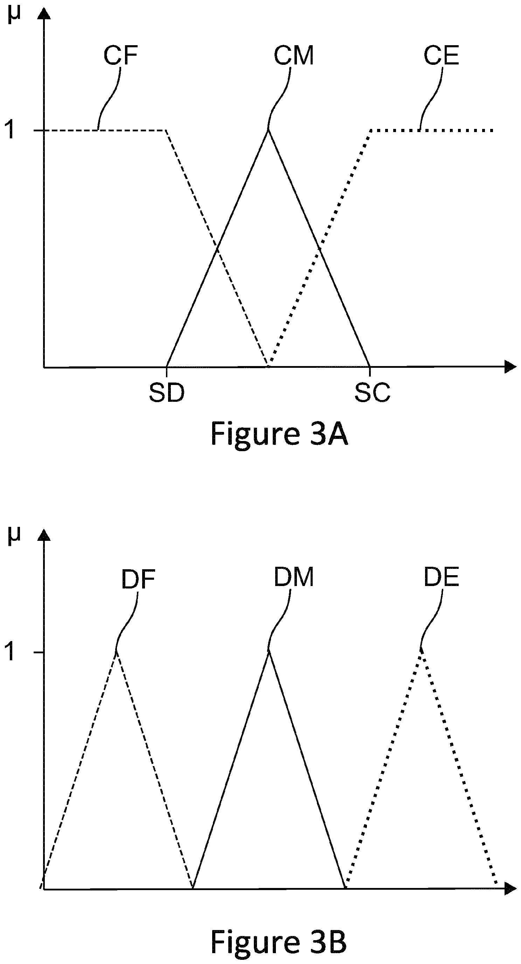

Dans un mode de réalisation illustré à la figure 3A, la fonction d'appartenance associée aux concentrations faibles CF forme un plateau à la valeur unitaire jusqu'au seuil de déclenchement SD puis décroît linéairement jusqu'à atteindre une valeur nulle pour une concentration équidistante du seuil de déclenchement SD et du seuil critique SC. La fonction d'appartenance associée aux concentrations modérées CM forme quant à elle un plateau à la valeur zéro, puis croît linéairement à partir du seuil de déclenchement SD jusqu'à la concentration équidistante du seuil de déclenchement SD et du seuil critique SC où elle atteint la valeur unitaire pour décroitre ensuite et atteindre la valeur nulle au seuil critique SC. Enfin, la fonction d'appartenance associée aux concentrations élevées CE forme un plateau de valeur nulle jusqu'à une concentration équidistante du seuil de déclenchement SD et du seuil critique SC, puis croît jusqu'à atteindre la valeur unitaire pour une concentration égale au seuil critique SC pour former ensuite un plateau à la valeur unitaire. Ainsi, l'objectif de pilotage est pris en compte à travers les fonctions d'appartenances de chaque polluant.

Dans un mode de réalisation, afin de déterminer, à partir de ces fonctions d'appartenances et de la quantité de chaque polluant mesurée, le débit d'air le plus adapté, le débit d'air est associé à un nombre de fonctions d'appartenances égal au nombre de fonctions d'appartenances associées à chaque polluant, chaque fonction d'appartenance du débit est associée à un niveau de débit et chaque niveau de concentration est associé à un niveau de débit. Par exemple, si chaque polluant se voit attribuer une fonction d'appartenance associée aux concentrations faibles et une fonction d'appartenance associée aux concentrations fortes, alors le débit se verra attribuer une fonction d'appartenance associée aux débits faibles DF et une fonction d'appartenance associée aux débits élevés DE.

Dans un mode de réalisation illustré à la figure 3B, le débit se voit attribuer une fonction d'appartenance associée aux débits faibles DF, une fonction d'appartenance associée aux débits moyens DM et une fonction d'appartenance associée aux débits élevés DE. De plus, les fonctions d'appartenances des débits sont agencées de sorte que tous les débits d'un intervalle donné appartiennent à une et une seule fonction d'appartenance. Dans le mode de réalisation de la figure 3B, les fonctions d'appartenances prennent la forme de triangles isocèles, mais d'autres fonctions peuvent être envisagées. Les débits limitant les fonctions d'appartenance sont choisis en fonction des capacités du ventilateur, la limite basse étant zéro (arrêt de la ventilation) et la limite haute le débit maximal du ventilateur $V_{max}$. Alternativement, on pourra calculer une limite de ventilation entre zéro et un puis reporter la valeur obtenue sur l'intervalle [zéro, débit maximum du ventilateur] afin d'obtenir la consigne de débit.

Il convient ensuite de calculer le débit correspondant à chaque catégorie de débits (débit faible, débit moyen et débit élevé) à partir de la quantité de chaque polluant quantifié lors de l'étape 102 de quantification.

Pour cela, dans un mode de réalisation, l'étape 103 de génération d'une consigne comprend pour chaque niveau de concentration :

- pour chaque polluant, une sous-étape de calcul de la valeur de la fonction d'appartenance dudit polluant correspondant à la concentration de polluant mesurée ;
- une sous-étape de sélection, de la valeur maximale parmi les valeurs calculées ;
- une sous-étape de report de ladite valeur maximale sur la fonction d'appartenance du débit d'air dont le niveau est associé au niveau de concentration considérée de sorte à en déduire une aire.

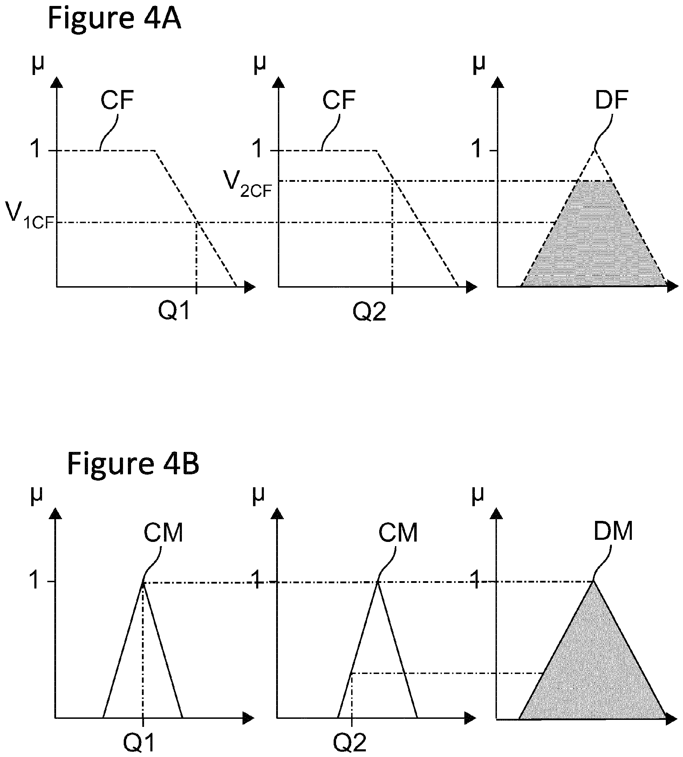

Dans un exemple de réalisation illustré à la figure 4A, les fonctions d'appartenances associées aux concentrations faibles CF et aux débits faibles DF sont tout d'abord considérées. De gauche à droite, cette figure présente la fonction d'appartenance associée aux faibles concentrations de $CO_2$ mesuré en concentration Q1, la fonction d'appartenance associée aux concentrations faibles CF d'un deuxième polluant mesuré en concentration Q2 et la fonction d'appartenance associés aux débits faibles DF. A la concentration Q1 correspond une première valeur $V_{1CF}$ donnée par la fonction d'appartenance associée aux concentrations faibles CF et au $CO_2$. A la concentration Q2 correspond une deuxième valeur $V_{2CF}$ donnée par la fonction d'appartenance associée aux concentrations faibles CF et au deuxième polluant (par exemple le TCOV).

Dans le mode de réalisation considéré, la plus grande valeur parmi la première valeur $V_{1CF}$ ou la deuxième valeur $V_{2CF}$ est retenue et projetée sur la fonction d'appartenance associée aux débits faibles DF de sorte à définir une droite parallèle à l'axe des abscisses. La droite obtenue à l'issue de la projection vient définir une aire entre l'axe des abscisses, ladite droite et la fonction d'appartenance associée aux débits faibles DF. Comme cela sera détaillé dans la suite, cette aire sera utilisée pour calculer la consigne de débit. La valeur reportée pour l'obtention de l'aire peut être, comme cela vient d'être présenté, la valeur maximale lorsque l'on cherche par exemple à assurer une qualité de l'air optimale, mais il est également possible de prendre la valeur la plus faible, la médiane ou bien encore la valeur moyenne.

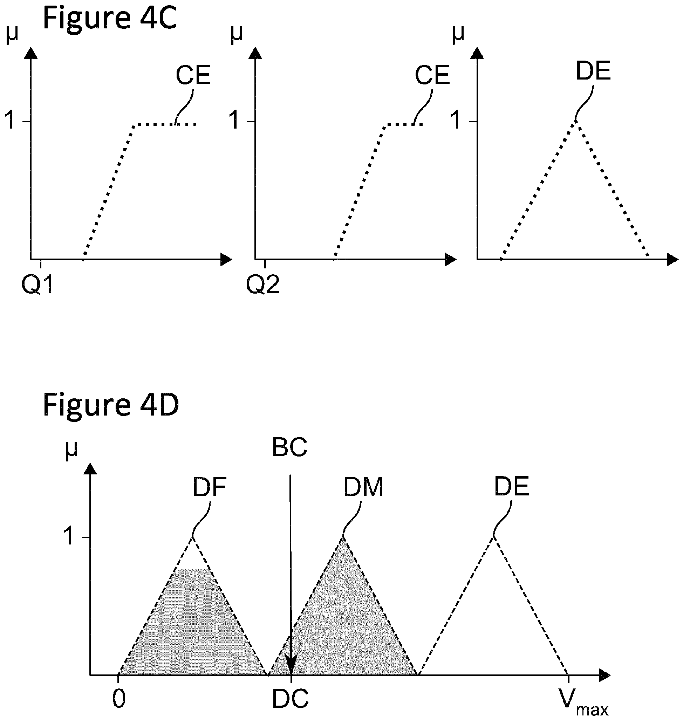

Il est procédé de manière identique avec les fonctions d'appartenances associées aux concentrations moyennes CM et aux débits moyens DM (figure 4B) et avec les fonctions d'appartenances associées aux concentrations élevées CE et aux débits élevés DE (figure 4C). En procédant de la sorte, trois aires sont obtenues. Dans l'exemple de la figure 4C, les concentrations Q1 et Q2 correspondent toutes deux à une valeur nulle de leur fonction d'appartenance respective associée aux concentrations élevées CE et l'aire définie au niveau de la fonction d'appartenance associée aux débits élevés DE est donc également nulle.

L'étape 103 de génération d'une consigne comprend également une sous-étape de calcul de la consigne de débit d'air à partir des aires ainsi déduites. Dans l'exemple de réalisation illustré à la figure 4D, le calcul du barycentre BC des trois aires obtenues précédemment permet d'obtenir une consigne de débit DC correspondant à une concentration Q1 de $CO_2$ et une concentration Q2 du deuxième polluant (par exemple le TCOV), ladite consigne respectant l'objectif de pilotage obtenu lors de l'étape 101 de calcul d'un objectif de pilotage. Il est intéressant de noter que cette méthode de calcul du débit permet de prendre en compte une pluralité de polluants par l'ajout des fonctions d'appartenances correspondantes sans modifier le principe de fonctionnement du procédé selon l'invention. Autrement dit, il est très facile de modifier un procédé selon l'invention de sorte à prendre en compte un ou plusieurs polluants supplémentaires.

Ainsi, à partir des objectifs de pilotage et de la quantité de polluants, une consigne de débit de ventilation est générée. Bien entendu, un plus grand nombre de fonctions d'appartenances peut être attribué à chaque polluant et au débit de ventilation. De même, la forme des fonctions d'appartenances peut différer de celle présentée dans les figures 3A à 4G.

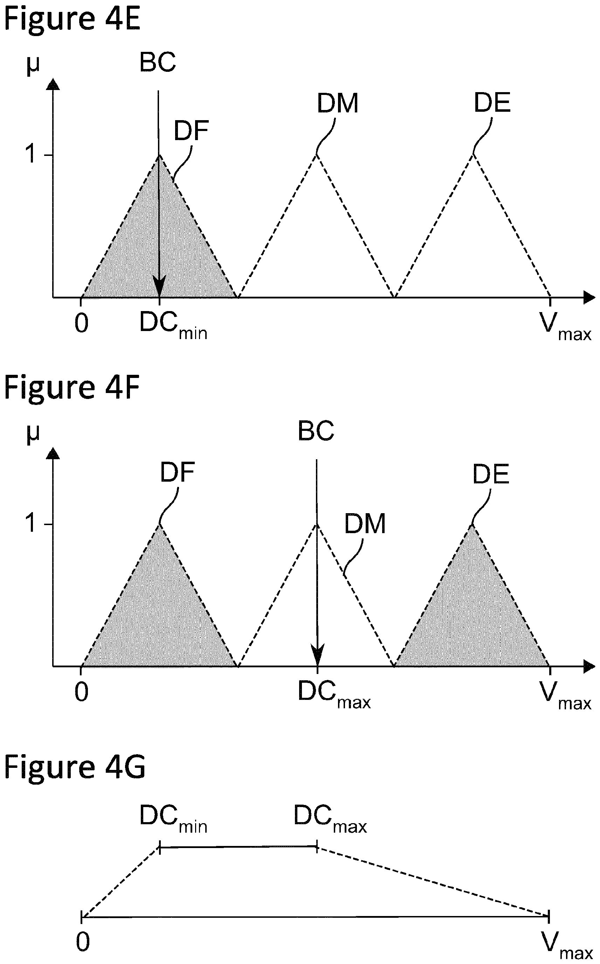

Comme illustré au figures 4E et 4F, la consigne minimale susceptible d'être obtenue par la méthode des barycentres est supérieure à zéro tandis que la consigne maximale susceptible d'être obtenue par ladite méthode est inférieure au débit maximum. Afin de corriger cette différence entre les consignes et les limites des moyens de ventilation, dans un mode de réalisation, après le calcul du barycentre, une correction est appliquée à la consigne obtenue. Pour cela, la consigne de débit DC correspondant à deux situations extrême est calculée. Plus particulièrement, le calcul concerne la consigne de débit DC correspondant à :

- une première situation dans laquelle l'ensemble des polluants sont sous leurs seuils de déclenchement de la ventilation (figure 4E) ;
- une deuxième situation dans laquelle un polluant est au-dessus de son seuil de ventilation maximale, les autres polluants étant en dessous de leurs seuils de déclenchement de la ventilation (figure 4F).

Une correction est ensuite apportée de sorte que la consigne de débit DC soit nulle dans la première situation et maximale dans la seconde situation. Autrement dit, comme illustré à la figure 4G une projection est faite de l'espace [valeur de consigne minimum par barycentre $DC_{min}$, valeur de consigne maximum par barycentre $DC_{max}$] vers l'espace [0, débit maximal possible $V_{max}$].

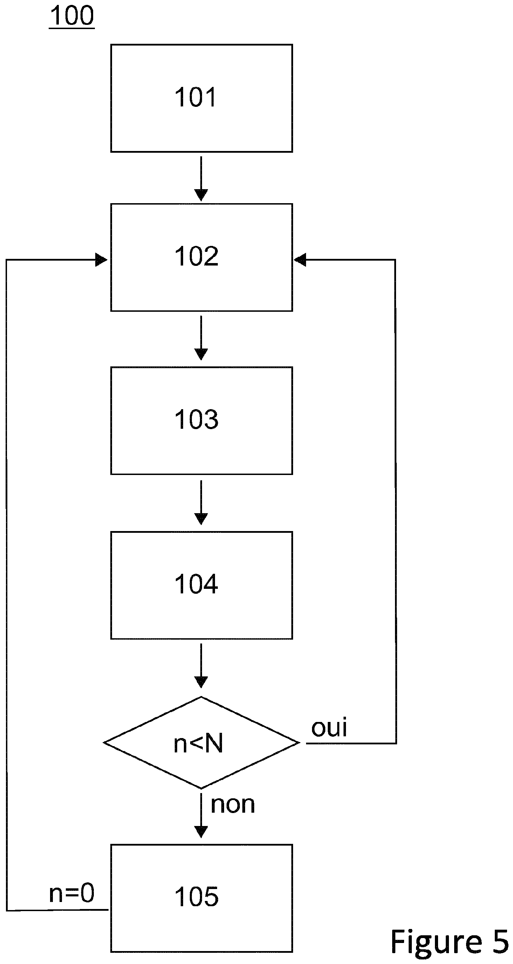

Dans un mode de réalisation illustré à la figure 5, le procédé selon un premier aspect de l'invention comprend une pluralité d'étapes 102 de quantification et d'étapes 103 de génération de consignes. De plus, lors chaque étape 103 de génération de consigne, un compteur d'itération (initialisé à zéro, par exemple lors de la première étape 102 de quantification) est incrémenté de un de sorte à refléter le nombre d'itérations n de l'étape 103 de génération d'une consigne. En outre, après chaque étape 103 génération d'une consigne, le procédé selon un premier aspect de l'invention comprend une étape 104 d'enregistrement des données concernant la quantification de polluant et la consigne associée. Dans un mode de réalisation, en plus des données concernant la quantification de polluant et la consigne associée, l'enregistrement concerne également un retour utilisateur. Le retour utilisateur permet notamment de modifier les objectifs de pilotage de sorte à correspondre aux attentes de ces derniers. Cet enregistrement peut par exemple se faire dans une base de données BD locale ou bien encore sur un serveur distant accessible par un réseau local, étendu ou par Internet. Ainsi, les données de fonctionnement de la régulation de la ventilation sont stockées afin de pouvoir être analysées de sorte à éventuellement corriger l'objectif de pilotage. Pour cela, le procédé selon un premier aspect de l'invention comprend, lorsqu'un nombre déterminé d'itérations N de l'étape 103 de génération de consignes est atteint, une étape 105 de modification de l'objectif de pilotage, ladite modification étant fonction des données enregistrées. Lors de l'étape 105 de modification de l'objectif de pilotage, le compteur d'itérations est également remis à zéro. De manière alternative ou complémentaire, la mise à jour de l'objectif de pilotage peut être effectuée sur demande de l'utilisateur.

Dans un mode de réalisation, en plus des données déjà mentionnées, l'enregistrement concerne également le taux d'occupations du bâtiment. Ce taux d'occupation peut être un taux d'occupation moyen ou bien alors prendre en compte l'évolution du taux d'occupation, par exemple en représentant un taux d'occupation moyen par heure. Ainsi, l'objectif de pilotage peut varier au cours du temps afin par exemple de prendre en compte le fait que la qualité de l'air doit être une priorité lorsque le taux d'occupation est non nul tandis que lorsque l'enceinte régulée est vide, la préservation de ladite enceinte (par exemple préservation du bâti) doit être favorisée. Dans un exemple de réalisation, lorsque le schéma horaire d'occupation est connue et régulier, l'objectif pourra prendre en compte cette régularité et anticiper l'arrivée des occupants, en s'assurant par exemple que la qualité de l'air est suffisante à l'arrivée de ces derniers. Le retour utilisateur pourra également concerner la prise en compte du taux d'occupation, par exemple en permettant à l'utilisateur d'indiquer si la qualité de l'air est adéquate à son arrivée. Dans un mode de réalisation, ce taux d'occupation pourra être obtenu par l'intermédiaire d'objets connectée. Par exemple, il est possible de détecter qu'un occupent se met en route vers l'enceinte (ou l'utilisateur le précise). De plus, à partir des enregistrements précédents, il est permis d'identifier qu'il lui faut quarante-cinq minutes pour arriver dans l'enceinte mais que seules trente minutes sont nécessaires pour récupérer une qualité de l'air respectant les critères sanitaires. Les objectifs de pilotage pourront alors prendre en compte ces différents paramètres afin d'élaborer la consigne de débit de l'air.

En opérant de la sorte, l'objectif de pilotage peut être adapté en fonction de la réponse de l'installation aux consignes de pilotage passées ou à l'évolution du nombre d'occupants par exemple. Cette adaptation peut notamment être obtenue par une analyse de sensibilité, par un métamodèle et/ou par un autoapprentissage.

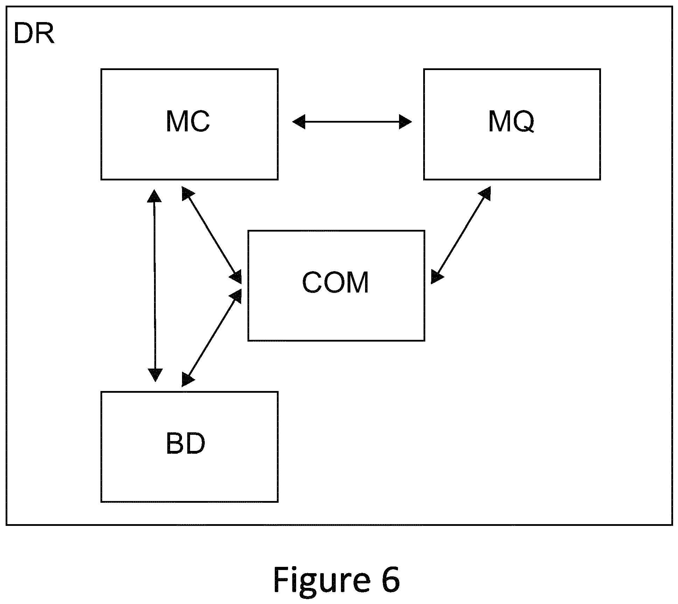

Un deuxième aspect de l'invention illustré en figure 6 concerne un dispositif DR de régulation de la ventilation d'une enceinte. Le dispositif DR selon un deuxième aspect de l'invention comprend des moyens MC configurés pour calculer un objectif de pilotage à partir de valeurs seuils, ledit calcul prenant en compte un critère de qualité de l'air intérieur et un critère d'efficacité énergétique. Ces moyens peuvent notamment comprendre un calculateur, ledit calculateur comportant un processeur couplé à une mémoire, et ladite mémoire comportant les instructions nécessaires au calcul de l'objectif de pilotage.

Le dispositif DR selon un deuxième aspect de l'invention comprend également des moyens MQ configurés pour quantifier la concentration en $CO_2$ et la concentration d'au moins un deuxième polluant dans l'air au sein de ladite enceinte. Lorsque cette quantification se fait, au moins en partie, par une ou plusieurs mesures, ces moyens comprennent alors des capteurs positionnés à différents endroits de l'enceinte et/ou à l'extérieur de l'enceinte afin de quantifier les polluants dans l'environnement immédiat de cette dernière. Ces capteurs peuvent comprendre des capteurs de $CO_2$, d'humidité, de particules, ou bien encore de COV. Lorsque cette quantification se fait, au moins en partie, à l'aide d'une ou plusieurs simulations, ces moyens MC comprennent un calculateur comportant un processeur couplé à une mémoire, ladite mémoire comprenant les instructions nécessaires à la mise en oeuvre de la simulation, ainsi que des moyens COM de communication de sorte à transmettre les résultats de la simulation et/ou télécharger les données nécessaires à la simulation.

Le dispositif DR selon un deuxième aspect de l'invention comprend également des moyens MC configurés pour générer une consigne de débit d'air à partir de la quantification effectuée, de l'objectif de pilotage et à l'aide d'un algorithme de pilotage de la ventilation. Ces moyens MC comprennent un calculateur comportant un processeur couplé à une mémoire, ladite mémoire comprenant les instructions nécessaires à la génération d'une consigne de débit de ventilation, ainsi que des moyens COM de communication de sorte à transmettre la consigne générée aux moyens de ventilation. Les moyens COM de communication précédemment évoqués peuvent prendre la forme d'une carte réseaux, par exemple une carte Ethernet, le dispositif DR communicant alors avec les moyens de ventilation à l'aide d'un réseau local ou étendue.

## Revendications

1. Procédé (100) de régulation de la ventilation d'une enceinte **caractérisé en ce qu'**il comprend :

    - une étape (101) de calcul d'un objectif de pilotage à partir de valeurs seuils, ledit calcul prenant en compte un critère de qualité de l'air intérieur et un critère d'efficacité énergétique ;
    - une étape (102) de quantification de la concentration en $CO_2$ et de la concentration d'au moins un deuxième polluant dans l'air au sein de ladite enceinte ;

- une étape (103) de génération d'une consigne de débit d'air à partir de la quantification effectuée, de l'objectif de pilotage et à l'aide d'un algorithme de pilotage de la ventilation.

2. Procédé selon la revendication précédente **caractérisé en ce que** l'étape (101) de calcul d'un objectif de pilotage comprend

- une sous-étape de simulation du comportement de l'enceinte ;
- une sous-étape de détermination de l'objectif de pilotage à partir des résultats de ladite simulation.

3. Procédé selon l'une des revendications précédentes **caractérisé en ce que** l'objectif de pilotage prend également en compte l'intermittence de la ventilation.

4. Procédé selon l'une des revendications précédentes **caractérisé en ce que** l'objectif de pilotage est variable au cours du temps.

5. Procédé selon l'une des revendications précédentes **caractérisé en ce que** l'étape (102) de quantification comprend une sous-étape d'acquisition, à l'aide de capteurs positionnés à différents endroits de l'enceinte, de la quantité de $CO_2$ et/ou la concentration d'au moins un autre polluant.

6. Procédé selon l'une des revendications précédentes **caractérisé en ce que** le deuxième polluant est un composé organique volatil.

7. Procédé selon l'une des revendications précédentes **caractérisé en ce que** l'étape (102) de quantification comprend une sous-étape de simulation prenant en compte les matériaux présents dans l'enceinte à réguler, la présence d'occupants, la météo et/ou la pollution de l'air extérieur à l'enceinte, ladite simulation fournissant la quantité de $CO_2$ et/ou la concentration d'au moins un autre polluant.

8. Procédé selon l'une des revendications précédentes **caractérisé en ce que** l'algorithme de pilotage est un algorithme par logique floue et **en ce que** chaque polluant est associé à au moins deux fonctions d'appartenances, chaque fonction d'appartenance étant associée à un niveau de concentration et dépendante de l'objectif de pilotage.

9. Procédé selon la revendication précédente **caractérisé en ce que** le débit est associé à un nombre de fonctions d'appartenances égal au nombre de fonctions d'appartenances associées à chaque polluant, **en ce que** chaque fonction d'appartenance du débit est associée à un niveau de débit et **en ce que** chaque niveau de concentration est associé à un niveau de débit.

10. Procédé selon la revendication précédente **caractérisé en ce que** l'étape (103) de génération d'une consigne comprend pour chaque niveau de concentration :

- pour chaque polluant, une sous-étape de calcul de la valeur de la fonction d'appartenance dudit polluant correspondant à la concentration de polluant mesurée ;
- une sous-étape de sélection, de la valeur maximale parmi les valeurs calculées ;
- une sous-étape de report de ladite valeur maximale sur la fonction d'appartenance du débit dont le niveau est associé au niveau de concentration considéré de sorte à en déduire une aire ;

et **en ce qu'**elle comprend une sous-étape de calcul de la consigne de débit d'air à partir des aires ainsi déduites.

11. Procédé selon l'une des revendications précédentes **caractérisé en ce qu'**il comprend une pluralité d'étapes (102) de quantification et d'étapes (103) de génération de consignes et **en ce qu'**il comprend :

- après chaque étape (103) de génération d'une consigne, une étape (104) d'enregistrement des données concernant la quantification de polluants et la consigne associée ; et
- lorsqu'un nombre déterminé d'itérations de l'étape (103) de génération d'une consigne est atteint, une étape (105) de modification de l'objectif de pilotage, ladite modification étant fonction des données enregistrées.

12. Dispositif (DR) de régulation de la ventilation d'une enceinte **caractérisé en ce qu'**il comprend :

- des moyens (MC) pour calculer un objectif de pilotage à partir de valeurs seuils, ledit calcul prenant en compte un critère de qualité de l'air intérieur et un critère d'efficacité énergétique ;
- des moyens (MQ) pour quantifier la concentration en $CO_2$ et la concentration d'au moins un deuxième polluant dans l'air au sein de ladite enceinte ;
- des moyens (MC) pour générer une consigne de débit d'air à partir de la quantification effectuée, de l'objectif de pilotage et à l'aide d'un algorithme de pilotage de la ventilation.

13. Produit programme d'ordinateur comprenant des instructions qui conduisent le dispositif (DR) selon la revendication 12 à exécuter les étapes du procédé (100) selon l'une des revendications 1 à 11.

14. Support lisible par ordinateur, sur lequel est enregistré le programme d'ordinateur selon la revendication 13.

100

Figure 1

Figure 2

Figure 3A

Figure 3B

## Figure 4A

## Figure 4B

# Figure 4C

# Figure 4D

## Figure 4E

## Figure 4F

## Figure 4G

100

Figure 5

Figure 6

EP 3 434 991 A1

Europäisches
Patentamt

European
Patent Office

Office européen
des brevets

# RAPPORT DE RECHERCHE EUROPEENNE

Numéro de la demande

EP 18 18 4364

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/178987 A1 (MEIRAV UDI [US] ET AL) 11 juillet 2013 (2013-07-11) | 1,3-6, 11-14 | INV. F24F11/00 F24F11/64 |
| Y | * revendications 1,2,11,14,20 * ----- | 2 | F24F11/65 F24F11/46 |
| Y | KR 2011 0026580 A (UNIV SUNGKYUNKWAN FOUND [KR]) 16 mars 2011 (2011-03-16) * alinéas [0020], [0031], [0032], [0043], [0079]; revendications 1,8 * ----- | 2 | F24F11/77 F24F110/52 F24F110/66 F24F110/70 |
| A | KR 101 760 722 B1 (KOREA CONFORMITY LABORATORIES [KR]; INNOFILTECH CO LTD [KR]) 24 juillet 2017 (2017-07-24) * alinéas [0064], [0072] * ----- | 1 | F24F120/10 F24F130/10 |
| A | FR 3 036 465 A1 (QUINOA [FR]) 25 novembre 2016 (2016-11-25) * page 9, ligne 18 - ligne 29; revendications 1,2,4 * ----- | 1 | |

DOMAINES TECHNIQUES RECHERCHES (IPC)

F24F

Le présent rapport a été établi pour toutes les revendications

| Lieu de la recherche | Date d'achèvement de la recherche | Examinateur |
|---|---|---|
| La Haye | 28 septembre 2018 | Coquau, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................

& : membre de la même famille, document correspondant

EPO FORM 1503 03.82 (P04C02)

18

**ANNEXE AU RAPPORT DE RECHERCHE EUROPEENNE
RELATIF A LA DEMANDE DE BREVET EUROPEEN NO.**

EP 18 18 4364

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-09-2018

| Document brevet cité au rapport de recherche | Date de publication | Membre(s) de la famille de brevet(s) | Date de publication |
|---|---|---|---|
| US 2013178987 A1 | 11-07-2013 | CN 104254741 A | 31-12-2014 |
| | | CN 107339779 A | 10-11-2017 |
| | | US 2013178987 A1 | 11-07-2013 |
| | | US 2016282001 A1 | 29-09-2016 |
| | | US 2018187907 A1 | 05-07-2018 |
| | | WO 2013106573 A1 | 18-07-2013 |
| KR 20110026580 A | 16-03-2011 | AUCUN | |
| KR 101760722 B1 | 24-07-2017 | | |
| FR 3036465 A1 | 25-11-2016 | AUCUN | |

Pour tout renseignement concernant cette annexe : voir Journal Officiel de l'Office européen des brevets, No.12/82